Europäisches Patentamt

European Patent Office

Office européen des brevets

(11) Publication number: 0 355 058 A2

# (12) EUROPEAN PATENT APPLICATION

(21) Application number: 89308213.1

(51) Int. Cl.4: A23D 7/00

(22) Date of filing: 14.08.89

(30) Priority: 16.08.88 GB 8819444

(43) Date of publication of application:
21.02.90 Bulletin 90/08

(84) Designated Contracting States:
AT BE CH DE ES FR GB GR IT LI NL SE

(71) Applicant: UNILEVER PLC
Unilever House Blackfriars P.O. Box 68
London EC4P 4BQ(GB)

(84) GB

Applicant: UNILEVER NV
Burgemeester s'Jacobplein 1 P.O. Box 760
NL-3000 DK Rotterdam(NL)

(84) BE CH DE ES FR GR IT LI NL SE AT

(72) Inventor: Brench, Alan William
28 Birchall Road
Rushden Northants(GB)
Inventor: Brown, Charles Rupert Telford
92 Castle Road
Bedford MK40 3PS(GB)
Inventor: Norton, Ian Timothy
29 Croft Way
Rushden Northants(GB)
Inventor: Wilding, Peter
113 Langham Road Raunds
Wellingborough Northants(GB)

(74) Representative: Dries, Antonius Johannes
Maria et al
Unilever N.V. Patent Division P.O. Box 137
NL-3130 AC Vlaardingen(NL)

(54) Food product.

(57) A low fat continuous fat phase food spread is prepared by phase inertion of a water-continuous fat emulsion with cooling under high shear, in which a protein macrolloidal composition e.g. whey or storage proteins, having a similar mouthfeel to fatty material is dispersed to provide a lower calorie content, preferably with the aid of a gelling aqueous phase in the emulsion.

# FOOD PRODUCT

The present invention is concerned with food products known as low fat spreads, and a process for preparing such a spread via phase-inversion.

Low fat spreads i.e. containing less than 60 wt % fat, have been developed which as far as possible retain the essential mouthfeel and other attributes of margarine and butter, while offering a lower fat content and hence a lower calorific value in keeping with contemporary demands for diet control.

Processes for the preparation of low fat spreads are known in which fat is emulsified in an aqueous phase and worked at a high shear rate with cooling to effect inversion to a fat-continuous dispersion, with the formation of fat crystals in the continuous phase upon which the spreadable characteristics of such products depends.

Intense shear must be applied to effect phase inversion i.e. above $25\ s^{-1}$ and preferably at least 100 $s^{-1}$. Fat crystallisation continues with or without further cooling, any mixing subsequent to phase inversion being at a substantially lower shear rate, preferably at most $25s^{-1}$. Further crystallisation may continue after all mixing operations have discontinued, to achieve plastic condition.

It has now been found that part of the fat present in such low fat spreads may be replaced by suitable protein compositions comprising non-aggregated heat-settable hydrated macrocolloids, to provide a spread of lower calorific content while retaining the original organoleptic and other consumer qualities. Accordingly, the present invention provides a process for the preparation of low fat spreads containing less than 60% fat by phase inversion under high shear of a fat composition comprising an aqueous fat emulsion with cooling to promote fat crystallisation, which is characterised in that following phase inversion a protein composition is dispersed under low shear in the resulting continuous fat phase of the fat composition to form a visually homogeneous product, preferably before fat crystallisation is completed, wherein the said protein composition comprises substantially non-aggregated aqueous macrocolloids essentially consisting of denatured heat-settable protein at least 90% of the macrocolloidal particles of which have an equivalent diameter in the range from 0.1-20 microns.

The present process permits the preparation of low fat spreads of a quality comparable with the quality of similar spreads having a substantially higher fat content. The products obtained by the present process are clearly superior to products obtained by using an equivalent process in which the protein composition is combined with the fat composition before inversion.

We have found that once the fat and protein compositions have been combined, conditions of high shear have an adverse influence on the quality of the final product. Thus preferably the protein composition is dispersed in the fat phase are combined at a shear rate of less than $25\ s^{-1}$. The shear rate should be sufficiently high to obtain a homogeneous product, i.e. a product that is perceived as homogeneous by the naked eye. The final aqueous content will of course include that of both the fat and protein compositions.

Where in particular the fat composition contains a relatively large amount of water, e.g. more than 50 wt.% it is particularly necessary to apply high shear to achieve phase inversion, preferably at least $100\ s^{-1}$. In order to obtain phase inversion it is moreover preferred that the fat composition emulsion is cooled to such an extent that solid fat crystals are formed, preferably to such an extent that at the stage (and temperature) of inversion the fat present in said emulsion has an N-value of at least 0.5, preferably from 0.5 to 10. The N-value at a certain temperature may be determined by means of NMR, using the method described in "Fette, Seifen, Anstrichmittel", 80 (1978), 180-186.

In this application the terms fat and oil are used interchangeably, unless indicated otherwise, to mean an edible substance, which may be solid or liquid at ambient temperature, consisting essentially of triglycerides, or comprising non-aqueous, non-toxic, material having physical properties similar to triglycerides, part of which may be indigestible, such as for example waxes, e.g. jojoba oil and poly fatty acid esters of mono- and di-saccharides, e.g. sucrose octa fatty acid ester, or mixtures thereof.

The present process may be carried out using any edible protein as long as it is a heat settable protein. The term heat settable is used here to specify a particular type of protein. The term heat settable therefore is not used here to indicate that the protein is undenatured. Preferably most of the heat settable protein is denatured, more preferably at least 75%. Protein in the protein composition may suitably be determined by means of Differential Scanning Calorimetry. The heat settable protein used in the present process is preferably selected from the group consisting of whey protein, egg-albumin, soy protein and blood albumin.

European patent application No. 0250623 discloses salad dressings comprising a proteinaceous, water-dispersible, macrocolloid comprising substantially non-aggregated particles of dairy whey protein coagulate having mean diameter particle size distributions, when dried, ranging from 0.1-2.0 microns, with less than about 2 percent of the total number of particles exceeding 3.0 microns in diameter. The colloid, when hydrated, is said to have a substantially smooth, emulsion-like organoleptic character and to approximate to the visual and organoleptic impressions normally associated with oil-in-water emulsions such as coffee-whiteners, pourable salad dressings, spoonable salad dressings, spreads or icings. In example 4A hazelnut-chocolate sandwich spread of the Nutella TM type is mentioned as an example of a sandwich spread in which the whey protein based composition may suitably be incorporated. Such macrocolloid compositions are suitable for use in the present invention. Further examples of such compositions are provided in our copending cases L.7127 and L.7138.

In yet another preferred embodiment of the present invention from 40-90 parts of the fat composition comprising from 15-85 wt.%, preferably from 15 to 70 wt.% of fat and more preferably from 18-60 wt.% of fat, is combined with 60-10 parts of the protein composition by weight.

The firmness of the protein composition increases with its (denatured) protein content As to the rheological properties, best products are obtained in the present process if the protein composition comprises from 8-50% wt.%, more preferably from 10-32 wt.% of heat settable protein, calculated on the water content of the composition.

Using the present process, products with acceptable oral response, are obtained if at least 90% of the macrocolloidal particles of the protein composition have an equivalent diameter in the range of 0.1-20 microns. Preferably at least 90% of the macrocolloidal particles have an equivalent diameter in the range of 0.1-15 microns. The equivalent diameter distribution of the colloidal denatured storage protein particles may suitably be established from microscopical images. Although such may be done by hand, in order to obtain more reproducible results it is preferred to determine the particle size distribution by means of an image analysing computer. Of course the magnification applied should be suitable for properly determining the equivalent diameter distribution. For determining the diameter-distribution in the aqueous composition of step (b) a magnification of x800 appeared to be appropriate.

It was found that under certain conditions part of the dispersed aqueous phase present in the oil-continuous emulsion and the aqueous phase consisting of the aqueous macrocolloids containing composition may coalesce, effectively resulting in dilution of the macrocolloid particles, with an adverse influence on the rheological properties of the final product. This may be prevented, or at least limited, to concentrate the protein in a proportion only of the aqueous phase in the product, thereby providing two aqueous phases distinguished by different compositions in respect of the protein distribution in the fat, by careful process control of the mixing and/or by the presence of one or more thickening and/or gelling agents in the aqueous phase. To this end preferably the fat composition prior to the combination with the protein composition, comprises a gelling aqueous phase. By a gelling aqueous phase is meant that said aqueous phase comprises one or more gelling and/or thickening agents at such a concentration level that a gel is formed, either already during processing or during storage. The ability of a certain aqueous phase to form a gel may be established by assessing whether the critical concentration for the particular combination of gelling and/or thickening agent(s) present in the aqueous phase, is exceeded.

Although preferably both the two dispersed aqueous phases are of a discontinuous nature, said phases may also be continuous, i.e. the present product may be bi- or even tri-continuous.

In order not to stimulate coalescence of the two different aqueous phases it is necessary to avoid subjecting the combined protein and fat compositions to conditions of high shear. Thus preferably the fat and protein and compositions are mixed under such mild conditions that the final product contains two distinct dispersed aqueous phases, one of which phases comprises at least 3 times, preferably 3 to 5 times and more preferably at least 5 times as much denatured heat settable protein as the other phase.

In a preferred embodiment of the spread according to the invention, the aqueous phase comprising less denatured heat settable protein, contains a gelling and/or a thickening agent. Preferably the aqueous phase comprising less denatured heat settable protein in a gelling aqueous phase. Examples of gelling and thickening agents which may suitably be incorporated are: gelatine and gelling polysaccharides such as for instance: carrageenan, agar and aliginate.

Another aspect of the present invention is a spread containing from 10-60 wt.% of a continuous fat phase, in which two distinct dispersed aqueous compositions are dispersed only one of which essentially consists of the protein composition.

European patent application 0101105 describes an edible emulsion comprising at least two differently formulated aqueous phases, said aqueous phases being present in the form of discrete, differently formulated drops dispersed in a continuous phase, wherein an effective amount of an ingredient inhibiting bacterial growth is concentrated along with a nutrient in part of the dispersed aqueous drops.

Furthermore in British patent 2035360 a fat-continuous emulsion containing gelled water droplets as well as ungelled water droplets is described, the gelled droplets having a larger average size than the ungelled droplets.

The products of the invention may be stabilised against bacteriological contamination by the addition of appropriate amounts of conventional stabilisers e.g. potassium solvate.

The present invention is further illustrated by means of the following examples:

Example 1

A low fat spread comprising 27 wt% of a continuous fat phase was prepared as follows:

60 wt% of a gelling aqueous phase, having a composition as given below, was blended with a fat blend containing 1.5 wt% of saturated mono-glycerides (Hymono 4404). The fat blend was composed as follows:

|  | Parts |
| --- | --- |
| Soya bean oil | 50 |
| Coconut oil | 11 |
| Soybean oil hardened to 41°C | 20 |
| Interesterified blend of coconut oil and soybean oil hardened to 41°C (93:67) | 19 |
| Aqueous phase | Parts |
| Gelatin (Extraco, Bloom 270) | 5 |
| Sodium chloride | 1.8 |
| Potassium sorbate | .1 |
| Water | 93.1 |
| Lactic acid to pH 5.5 | |

The aqueous phase at a temperature of 55°C was blended with the fat phase in a mixing vessel. The water continuous emulsion thus obtained was subsequently pasteurised at a temperature of about 85°C and then held in a feed tank at 40°C. The water continuous pre-mix was cooled to a temperature of 7°C and passed through a pair of cooled scraped surface heat exchanger units (Votator A) in series, operating at 1400 r.p.m., whereupon the temperature was 10°C. The water continuous dispersion so formed was fed to a crystalliser unit in which phase inversion took place; the oil continuous dispersion formed left the crystalliser unit having a temperature of 21°C and contained a significant crystal formation.

The oil continuous dispersion was subsequently combined, in a weight ratio of 1:0.48 with an aqueous composition, containing about 10 wt% of heat-denatured soya bean protein based macro-colloidal particles having an average size of 11.8 micron, which composition was made by the following procedure:-

A dispersion of soya protein was made by dispersing 3 Kg of soya concentrate flour (Newpro, I Lucas Ingredients Ltd Bristol) in 90 litres of deionised water containing 30g potassium sorbate as an anti-microbial agent. The dispersion of the flour was achieved by mixing the dry ingredients with water using a Silverson mixer/emulsifier operated at maximum speed. When the concentrate was adequately dispersed, mixing was continued for another 20 min. to ensure maximum dissolution of the soya proteins. Insoluble material was then removed by centrifuging at 10000 x g for 90 min.

The clarified extract was decanted and titrated to pH 5.3 with 5M hydrochloric acid to bring about precipitation of the protein. The acid was added drop wise over the period of about 5 mins to prevent localised high acid concentrations which may result in the formation of large protein precipitate aggregates. The vigorous stirring was employed to minimise the aggregation of the precipitated protein (cf Bell et al "Advances in Biochemical Eng." (1983). The final slurry of precipitated storage protein contained protein particles with an average size of 10.4 micron (Malvern Mastersizer). The slurry was allowed to stand without agitation until the precipitated protein formed a sediment. The supernatant liquor was decanted and the remaining protein sediment containing 19% solids was used for subsequent processing.

A high speed churn (HC) comprising a jacketed cylindrical barrel 12 cms long and 4 cms internal diameter, with a smooth surface fitted with a smooth surface rotor and having an annular gap of 2 mm., was connected directly to a scraped surface heat exchanger. (A-unit) (Heynau - Moosacher Strasse 51, 8000 Munich, Germany). The high speed churn jacket temperature was set to 96°C and the A-unit jacket temperature was set to 12°C. The units were energised and the HC operated at 6000 rpm and the A-unit at 1000 rpm. At these speeds, the rate of material displacement in the HC was calculated to be 5655 $s^{-1}$ and 12000 $s^{-1}$ in the A unit. The protein slurry was preheated to 30°C and then pumped through the HC/A-unit combination at a throughput of 50 50 g/min. At this throughput, the residence times in the HC and A-units were 180s and 18s respectively. The resulting macro-colloidal dispersion emerged from the process at 26°C and had a paste-like consistency, displaying plastic flow behaviour when compressed. The mean size of the particles was measured to be 11.8 microns, at least 90% of the particles having an equivalent diameter in the range of 0.1 to 20 microns. (Malvern Mastersizer). The product was shown by DSC analysis to have a substantial amount (ca 80%) of the storage protein in the heat denatured state.

The cooled product was mixed at 28°C with the inverted fat continuous emulsion under mild conditions in a crystalliser unit rotating at a speed of 600 rpm. The product was obtained at 15°C and had a water content of about 27 wt% and was found to have properties similar to a fat spread containing 40 wt% fat.

Example 2

Aqueous and fat phases were prepared and blended as described in Example 1.

The oil continuous dispersion obtained was subsequently combined, in a weight ratio of 1:0.48 with an aquous composition, containing about 12 wt% of heat-denatured milk whey protein based macro-colloidal particles having an average size of 4.5 micron, which composition was made by the following procedure.

Lactose (BDH Chemicals) was dissolved in deionised water at 45°C to give a concentration of 12 wt% and then cooled to 35°C. To this solution was added potassium sorbate (HP Bulmer Ltd Hereford HR4 OLE England) (0.1 wt%) and soluble UF whey protein concentrate (12 wt%) (Milei GmbH D-7970 Leutkirch, Adrazhofen im Allau, West Germany) with vigorous stirring using a Moritz mixer (Moritz Chemical Engineering Company) at speed setting ten. Citric acid (5M) was added to bring pH to 4.0. The resulting slurry was then allowed to stand for 1 hour without agitation to facilitate deaeration. The deaerated protein dispersion was heated to 45°C and passed through a high speed churn as described in Example 1. The jacket temperature was heated to 95°C with steam heated water and the rotor operated at 2000 r.p.m. giving a displacement rate of 3000 s⁻¹.

The heat denatured protein macro-colloid emerged from the from heat exchanger at a temperature of 89°C at the rate of 15 Kg per hr and collected in 250g plastic tubs. The hot product was cooled to 29°C and mixed with the inverted fat continuous emulsion under mild conditions in a second crystalliser unit operating at a speed of 600 r.p.m. The product was obtained at 15°C and had a fat content of about 27 wt% and was found to have properties similar to a fat spread containing 40 wt% fat.

The above procedure was repeated twice except that the aqueous whey protein dispersion and inverted oil-continuous emulsion were combined in such weight ratios that products comprising 30 wt% and 35 wt% were obtained. The spreads thus obtained appeared to display a rheology and mouth response similar to the spread comprising 27 wt% fat.

## Claims

1. Process for the preparation of low fat spreads containing less than 60 wt.% fat by phase inversion under high shear of a fat composition comprising an aqueous fatty emulsion with cooling to effect fat crystallisation, characterised in that following phase inversion a protein composition is dispersed under low shear in the resulting continuous fat phase of the fat compsition to form a visually homogeneous composition, wherein the said protein composition comprises substantially non-aggregated aqueous macrocolloids essentially consisting of denatured heat-settable protein at least 90% of the macrocolloidal particles of which have an equivalent diameter in the range from 0.1-20 microns.

2. Process according to claim 1 wherein the protein composition is dispersed by a shear rate of less than 25 s⁻¹.

3. Process according to claims 1 or 2 wherein said protein is selected from the group consisting of whey protein, egg albumin, soy protein and blood albumin.

4. Process according to claim 1, 2 or 3 wherein the protein composition is dispersed in the fat composition in a proportion from 10 to 60 in from 90 to 40 parts by weight of a fat composition and that the fat composition contains from 15 to 70 wt.% of fat.

5. Process according to any one of the preceding claims wherein the protein composition comprises from 8 to 50 wt.% of the said protein.

6. Process according to any one of the preceding claims wherein the protein composition is dispersed at a stage at which the fat composition exhibits a solid fat content of at least 0.5 by N value.

7. Process according to any one of the preceding claims wherein the protein composition is dispersed in the fat composition under conditions limiting coalescence of the respective aqueous dispersions in the fat.

8. Process according to claim 7 wherein said conditions provide distinct dispersed aqueous compositions of which one contains from 3 to 5 times as much said protein as the other.

9. Process according to claim 7 or 8, wherein the fat compositon contains a gelling aqueous phase for promoting the dispersion of the aqueous protein concentration in the fat composition without dilution.

10. Spread comprising less than 60 wt. % of a continuous fat phase, balance an aqueous phase including an aqueous protein composition comprising non-aggregated macrocolloids, essentially consisting of denatured heat-settable protein, at least 90% of the macrocolloidal particles having an equivalent diameter in the range of from 0.1 to 20 microns.

11. Spread according to claim 10 wherein the said protein is concentrated in a limited proportion of the dispersed particles constituting the aqueous phase.

12. Spread according to claim 11 wherein the concentration of the said protein is at least 3 times greater in one aqueous dispersed composition than in the other.

13. Spread according to claim 10, 11 or 12, wherein the aqueous dispersed composition containing less protein additionally comprises a gelling and/or thickening agent.

14. Spread according to claim 13 wherein the aqueous composition containing a gelling and/or thickening agent comprises a gelling aqueous phase.

15. Spread according to any one of the preceeding claims 10 to 14, whenever obtainable by a process according to any of the preceding claims 1 to 9.